**Europäisches Patentamt**

**European Patent Office**

**Office européen des brevets**

(11) Publication number: **0 188 335**

**B1**

# EUROPEAN PATENT SPECIFICATION

(45) Date of publication of patent specification: **05.12.90**

(51) Int. Cl.⁵: **G 01 N 29/06**

(21) Application number: **86300131.9**

(22) Date of filing: **09.01.86**

(54) Ultrasonic testing of materials.

(30) Priority: **15.01.85 US 691599**

(43) Date of publication of application:
**23.07.86 Bulletin 86/30**

(45) Publication of the grant of the patent:
**05.12.90 Bulletin 90/49**

(84) Designated Contracting States:
**DE FR**

(56) References cited:
**DE-A-3 230 308
DE-A-3 236 018
US-A-4 307 612**

**JOURNAL OF THE ACOUSTICAL SOCIETY OF
AMERICA, vol. 71, no. 3, March 1982, pages
635-640, New York, US; T. SATO et al.:
"Superresolution ultrasonic imaging system by
forced vibration of object"**

**ULTRASONICS, vol. 23, no. 1, January 1985,
pages 14-20, Guildford, Surrey, GB; F.K. LAM et
al.: "Flaw characterization based on diffraction
of ultrasonic waves"**

(73) Proprietor: **THE BABCOCK & WILCOX
COMPANY
1010 Common Street, P.O. Box 60035
New Orleans, Louisiana 70160 (US)**

(72) Inventor: **Flora, John H.
5108 Wedgewood Road
Lynchburg Virginia 24501 (US)**
Inventor: **Powers, Thomas, Jr.
211 Gurroak Road
Lynchburg Virginia 24502 (US)**

(74) Representative: **Cotter, Ivan John et al
D. YOUNG & CO. 10 Staple Inn
London WC1V 7RD (GB)**

# EP 0 188 335 B1

**Description**

This invention relates to methods and apparatus for the ultrasonic testing of materials.

In the field of ultrasonic testing, it is known to scan a material to be tested either by using a plurality of transducers spaced around the material or by the use of a single transducer which is moved physically to various positions around the material to be examined. See, for example, US Patent No. US—A—3 543 229 (Baum) and US Patent No. US—A—3 990 300 (Kossoff).

It is also known to convert ultrasonic signals received from ultrasonic test equipment into digital form and to store them in a memory. See, for example, US Patent No. US—A—4 163 393 (Gutierrez et al) and US Patent No. US—A—3 857 052 (Beller). US—A—4 163 393 also teaches that comparisons between signals received from different locations of the transducer may be utilised to test for flaws. The system disclosed in US—A—4 163 393 cancels similar signals from the transducers. US—A—3 857 052, on the other hand, discloses comparing signals obtained at different time increments to detect a variation over time at the same point of the material to be tested.

Conventional ultrasonic testing provides time, amplitude and spatial information which is combined through mechanical and electronic apparatus to form so called A, B and C scans for flaw detection and sizing. The most commonly used technique is time-amplitude or A scan ultrasonic testing. All of these techniques make use of either a continuous wave or pulse excitation and time reference signal. The primary limitations with these techniques are that they only allow discrimination via signal amplitudes, time separation, or spatial separation, which are variables extremely sensitive to the flaw orientation, test material properties, and test article geometry.

Typical ultrasonic testing makes use of a relatively narrow beam radiation pattern which is highly directional in material interrogation. When coarse grained materials (such as stainless steels, etc.) are encountered, the highly directional radiation patterns of the internal grain structures interact with the transducer pattern to provide high amplitude background signals. These signals are inseparable from those flaws yielding comparable amplitude levels when the conventional techniques are used. Under these conditions, the probability of missing flaws and rejecting material due to "false flaws" is very high.

Previous inspection techniques used ultrasonic transducers which made a position-to-position interrogation of these materials where each position was an independent assessment of the material in the path of the beam. This technique has been accepted as adequate for fine grained material inspection, but is less than desirable for coarse grained material. In these materials, absorption and scattering of the ultrasonic beam limits flaw detection capabilities to a greater extent than with other materials.

German Patent Application No. DE—A—3 236 018 discloses a method for the ultrasonic testing of a material, the method comprising transmitting ultrasonic waves into the material to produce reflected signals which are characteristic of internal structures of the material, detecting the reflected signals at a plurality of spaced locations distributed along a scan path over the material, and processing the detected signals, by time delay correction, addition and storage, to produce information which is indicative of internal structures of the material. More specifically, a testing head comprising a phased array of transducers is employed. At a first position, that testing head is pivoted between different angles. For each angle, signals from the transducers are subjected to transit time correction and added together, and the resultant sum signal is stored. The head is then moved to a new position. At the new position, for each angle, the signals from the transducers are again subjected to transit time correction and added together. The resultant sum signal for each angle is added to the sum signal obtained for the corresponding angle at the first position. After testing at the final position, the cumulative stored signals for the different angles are rectified for display.

DE—A—3 230 308 discloses another ultrasonic testing method employing multiple heads and signal processing involving transit time correction, addition and storage.

According to one aspect of the invention there is provided a method for the ultrasonic testing of a material, the method comprising:

transmitting ultrasonic waves into the material to produce reflected signals which are characteristic of internal structures of the material;

detecting the reflected signals at a plurality of spaced locations distributed along a scan path over the material; and

processing the detected signals, by time delay correction, addition and storage, to produce information which is indicative of internal structures of the material;

characterised in that said processing comprises:

storing the detected reflected signal for each location;

for each individual location, multipying the stored detected reflected signal for each other location by a respective corrective phase shift factor which is characteristic of a time delay for the detected reflected signal from that other location to the individual location, thereby to obtain a phase-corrected reflected signal for each other location; and

for each individual location, adding the phase-corrected reflected signals for the other locations to the reflected signal for the individual location to form a composite signal which is indicative of internal structures of the material, each composite signal equalling:

$$\sum_{i=-N}^{N'} S_{(a+i)} \, e^{j2K \, (d^2 + X_i^2)^{\frac{1}{2}}}$$

wherein:

N is the number of locations before an individual location a;

N' is the number of locations after the location a;

$S_{(a+i)}$ is the reflected signal at each location a + i, i being a number designating each individual location;

$X_i$ is the distance between location a and location a + i along the scan path;

d is the depth from a surface of the material to the internal structure which causes the reflected signal; and

K is equal to $2\pi/\lambda$, $\lambda$ being the wavelength of the ultrasonic waves.

According to a preferred method, described hereinbelow, ultrasonic signals from various aspect angles along the scan are combined to improve the reliability of defect detection. The multi-angle system reinforcement technique will also improve defect signal strength above background noise. This results in fewer false defect indications.

According to another aspect of the invention there is provided apparatus for the ultrasonic testing of a material, the apparatus comprising:

transducer means for applying an ultrasonic wave to the material and for receiving a reflected ultrasonic signal back from internal structures of the material;

scanning means connected to the transducer means for receiving a reflected ultrasonic signal from a plurality of spaced locations lying on a scan path extending across the material; and

processing means for processing the reflected ultrasonic signals, by time delay correction, addition and storage, to produce information which is indicative of internal structures of the material;

characterised in that the processing means comprises:

a memory connected to the transducer means for storing the reflected ultrasonic signals from each location on the scan path; and

calculator means connected to the memory and operative to calculate a composite signal for each individual location, which composite signal is equal to the summation of the reflected ultrasonic signal from that individual location plus a phase-corrected reflected ultrasonic signal from each other location spaced from that individual location, each of which phase-corrected reflected signals is equal to the reflected signal multiplied by a phase shift factor corresponding to a time delay for the reflected signal from that other location to the individual location;

the memory and calculator means being constituted by a computer for storing each reflected signal and for calculating each composite signal according to the relationship:

$$\sum_{i=-N}^{N'} S_{(a+i)} \, e^{j2K \, (d^2 + X_i^2)^{\frac{1}{2}}}$$

wherein:

N is the number of locations before an individual location a;

N' is the number of locations after the location a;

$S_{(a+i)}$ is the reflected signal at each location a + i, i being a number designating each individual location;

$X_i$ is the distance between location a and location a + i along the scan path;

d is the depth from a surface of the material to the internal structure which causes the reflected signal; and

K is equal to $2\pi/\lambda$, $\lambda$ being the wavelength of the ultrasonic waves.

Multiplication of stored signals by a corrective phase shift factor compensates for the time delay between the signals, the signals being used in an additive and averaging manner to provide reinforcement of the measured signals which increases signal-to-noise ratio.

A preferred embodiment of the present invention described hereinbelow provides an ultrasonic scanning system for coarse grained materials which provides increased signal-to-noise ratios. To accomplish this, either a single transducer is scanned over the material to be tested or a transducer array is utilised to transmit and receive ultrasonic signals to and from the test material. The ultrasonic equipment receives the pulses and stores them in digital memory. Means are provided such as a computer or micro-

3

processor for multiplying the received pulses by a corrective phase shift factor to compensate for the time delay of the ultrasonic pulses from the various scan angles. A signal average for each location along the scan is computed, which comprises a reinforced signal having an increased signal-to-noise ratio.

In the preferred embodiment, the received pulses from each location of the scan are detected and stored, in complex form, in digital memory. For each location on the material which was scanned, not only the signal of the transducer or transducer array for that location is used but also the signals from other locations in the scan. The signals from the other locations are multiplied by the corrective phase shift factor to compensate for the time delay of the ultrasonic pulses from these other locations. The amount of phase shift correction of course increases with the angle of incidence. The signals from the scan positions are each thus rotated (phase-corrected) so that they add or reinforce each other. A signal average for each location along the scan is thus computed by using the appropriate phase shift rotation for each recorded signal. Laboratory experiments have indicated that the probability of detection and signal-to-noise ratio can be improved by using this technique. The signal reinforcement technique improves flaw detectability by increasing the signal-to-noise ratio. The ultrasonic beam information which was sampled during the dynamic mode of scanning is later combined to provide a composite signal of the material characteristics at each location along the scan. The material characteristic is a function of many different aspect angles.

The composite signal approach will reinforce or enhance volumetric deflections (such as flaws) due to their interaction with the ultrasonic beam from multiple angles. Signals which are generated due to the characterstic internal material structure (such as grain) will be de-emphasised due to their directionality and relative acoustic impedence which do not yield multiple reflections from different aspect angles which constructively combine vectorially to comparable magnitudes. Multiple reflections from different aspect angles do occur when an actual flaw is present. This results in an effective volumetric inspection technique for material characteristics and flaw detection.

Although the embodiment described hereinbelow primarily makes use of digital processing techniques, the phase sensitive construction of a composite material response can be implemented with multielement or single element transducers which combine signals in analog form.

The invention will now be further described, by way of illustrative and non-limiting example, with reference to the accompanying drawings, in which:

Figure 1 is a block diagram schematically showing apparatus embodying the invention for the ultrasonic testing of a material;

Figure 2 is an explanatory diagram showing a piece of material to be tested and three test locations lying on a scanned path over the material; and

Figure 3 is a flow chart showing a program which can be utilised in an embodiment of the invention.

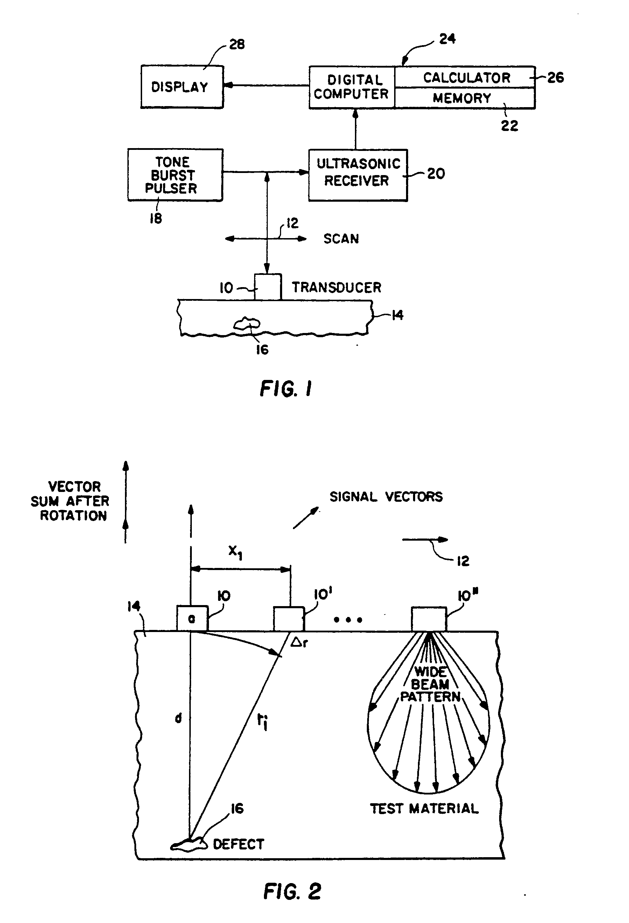

As shown in Figure 1, apparatus according to a preferred embodiment of the invention includes a transducer or array of transducers 10 which can be moved or sequentially activated in a scan direction 12, over the surface of a material 14 to be tested. The apparatus transmits ultrasonic waves into the material 14 to detect the presence of flaws or defects 16. This is despite the material 14 possibly having a coarse grained structure. Such coarse grained materials include cast metal, stainless steel, and inconel.

Ultrasonic waves which are transmitted into the material 14 are generated by a tone burst pulser 18 which can use the same or a different transducer to that used for receiving the reflected signals. An ultrasonic receiver 20 is connected to the transducer or transducer array 10. The reflected ultrasonic signals from the material 14 are converted into digital form and stored in a memory 22 of a computer 24. The computer 24 also includes a calculator or calculating section 26 whose purpose will be described later. A display 28 is connected to the computer 24 for displaying the test results in a graphic or numeric manner.

As shown in Figure 2, a set of signals is generated by sampling reflected ultrasonic signals at a plurality of spaced locations or positions in the scan path 12. These locations are designated by transducers 10, 10' and 10''. The distance between the transducers 10 and 10' is shown as $X_I$. An individual location of the transducer 10 which is designated a, is at a distance d from a defect 6 in the material 14. The distance of the defect 16 from the transducer 10' is a distance $r_I = d + \Delta r$. The additional distance $\Delta r$ represents a time delay for the propagation of a reflected signal from the defect 16 to the transducer or transducer position 10', with respect to the position a.

The signal from the location a to be analysed is not only the reflected ultrasonic signal to the transducer at that location, but also the summation of contributing signals from each of the other locations both before (not shown) and after the location a. The contribution from each other location is multiplied by a corrective phase shift factor that corresponds to the delay time caused by the additional distance $\Delta r$ and can be thought of as a vector rotation factor R.

By storing the signal from each transducer location along the scan path in the memory 22, the reflected signals from all the locations can be used to analyse each individual location.

As shown in Figure 2, the ultrasonic wave transmitted from the transducer 10'' is in the form of a wide band pattern containing vectors extending in various directions. This vector characteristic of the travelling wave may be used to enhance the signal received from any individual one of the locations on the material. The back scattering energy, due to the granular nature of the material, is compensated for or subtracted out by adding together the effects, suitably weighted, from all of the other locations at the individual location of interest. Each individual location is analysed in turn to determine the presence of defects such as the defect 16. This enhances the signal-to-noise ratio.

EP 0 188 335 B1

The signal from each other location is multiplied by the rotation factor R which can be calculated as follows:

*Vector Rotation Factor* (R)

$$R = {}_e j2Kr_i$$

$$K = \frac{2\pi}{\lambda}$$

$$r_i = (d^2 + X_i^2)^{\frac{1}{2}}$$

$\lambda$ = wavelength of ultrasonic signals.

*Total Signal (STa) Computed for Location "a"*

$$ST_a = \sum_{i=-N}^{N'} S_{(a+i)} \, e^{j2K \, (d^2 + X_i^2)^{\frac{1}{2}}}$$

where:

N = number of signal data samples location "a";

N' = number of signal data samples after location "a";

$S_{(a+i)}$ = unrotated signal received at location "a + i";

$X_i$ = scan distance from location "a" to location "a + i"; ($X_i$ = i$\Delta$x when data are taken at equal multiple increments $\Delta$x along x);

i = data number;

a = lateral location for computation of signal sum;

d = depth beneath surface.

*Displayed Signal* $(SD_a)$

$SD_a = ST_a = (SR_a^2 + SI_a^2)^{\frac{1}{2}}$, signal amplitude at position a;

$SR_a$ = real part of complex sum, $ST_a$, at position a;

$SI_a$ = imaginary part of complex sum, $ST_a$, at position a.

As shown above, the total signal $ST_a$ which is computed for each individual location a, is a function of the summation of the signal from that location plus the signals, suitably weighted by the respective rotation factors, from each of the other locations. There are assumed to be N + N' locations in all in the scan path 12. The displayed signal $SD_a$ is equal to the absolute value of the composite signal $ST_a$ which is a function of both the real and the imaginary parts of the complex signal, both the real and the imaginary parts of each signal being stored in the memory 22.

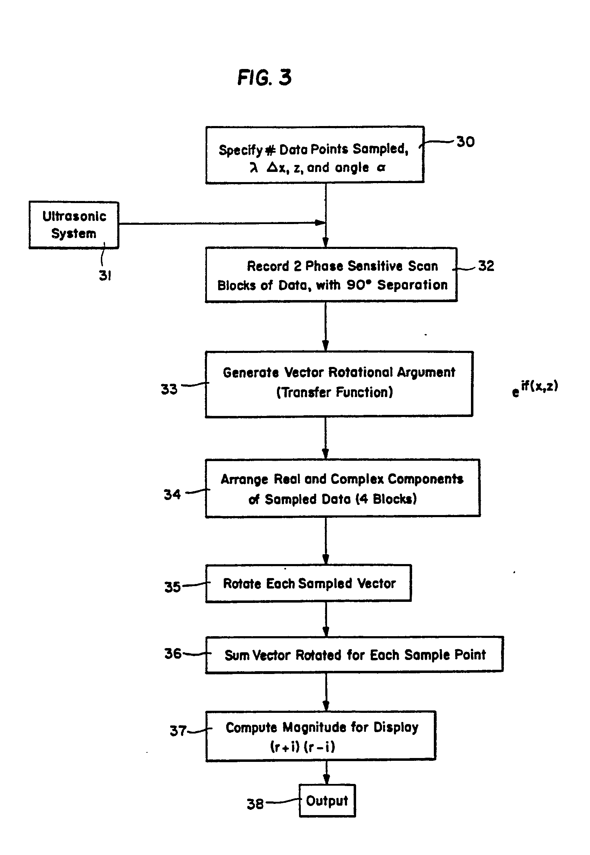

Figure 3 is a flow chart showing the calculations which can be performed by the calculator or calculating section 26 of the computer 24. In a block or box 30, initial known values, such as the wavelength, the distance between sampling locations, the depth of the material to be interrogated (z), and the scanning angle (a), are supplied to the calculating section. The ultrasonic system, shown as a block 31, inputs the reflected signals for storage in memory. In a block 32, two phase sensitive scan blocks of data are generated which are separated by 90° with respect to each other. The ultrasonic inspection is implemented by electrically mixing a reference sinusoidal signal with the time gated tone burst reflected from the material. To determine both in-phase and quadrature components, two linear scans across the material are taken. On the second scan, the reference signal is shifted 90° from the initial reference signal. In both cases, reference or reference plus 90°, the ultrasonic signal is mixed in a double balanced mixer to provide the in-phase (or real) and the quadrature (or imaginary) components of the received voltage.

The dual sequence of scanning to obtain in-phase and quadrature components was used on various test blocks to verify the detection results. Typically a 10 cm or 15 cm (four or six inch) scan was made to collect 1024 data points or locations, at equal intervals in the scan path. The algorithm combined the two scans to compute a composite point-by-point sum which was displayed graphically. A H—P Fast Fourier analyser and analog electronic instrumentation were utilised to process the signals.

A block 33 of the flow chart of Figure 3 produces the rotational factor for each location. In a block 34, the real and imaginary components of the signal from each location are stored. The multiplication step takes place in a block 35 wherein the rotation factor is applied to each vector. The summation for each individual point takes place in a block 36 and the magnitude of the detection signal for the display 28 is calculated in a block 37. A block 38 causes an output signal to be sent to the display 28.

Actual experiments conducted with metal specimens through which holes had been drilled to simulate defects confirmed a correlation between the composite signal from each location and the presence of the defect (drilled through hole).

5

# EP 0 188 335 B1

**Claims**

1. A method for the ultrasonic testing of a material, the method comprising:

transmitting ultrasonic waves in to the material (14) to produce reflected signals which are characteristic of internal structures of the material (14);

detecting the reflected signals at a plurality of spaced locations distributed along a scan path (12) over the material (14); and

processing the detected signals, by time delay correction, addition and storage, to produce information which is indicative of internal structures of the material (14);

characterised in that said processing comprises:

storing the detected reflected signal for each location;

for each individual location, multipying the stored detected reflected signal for each other location by a respective corrective phase shift factor which is characteristic of a time delay for the detected reflected signal from that other location to the individual loocation, thereby to obtain a phase-corrected reflected signal for each other location; and

for each individual location, adding the phase-corrected reflected signals for the other locations to the reflected signal for the individual location to form a composite signal which is indicative of internal structures of the material (14), each composite signal equalling:

$$\sum_{i=-N}^{N'} S_{(a+i)} \, e^{j2K\,(d^2 + X_i^2)^{\frac{1}{2}}}$$

wherein:

N is the number of locations before an individual location a;

N′ is the number of locations after the location a;

$S_{(a+i)}$ is the reflected signal at each location a + i, i being a number designating each individual location;

$X_i$ is the distance between location a and location a + i along the scan path;

d is the depth from a surface of the material to the internal structure which causes the reflected signal; and

K is equal to 2π/λ, λ being the wavelength of the ultrasonic waves.

2. Apparatus for the ultrasonic testing of a material, the apparatus comprising:

transducer means (10) for applying an ultrasonic wave to the material (14) and for receiving a reflected ultrasonic signal back from internal structures of the material (14);

scanning means (20) connected to the transducer means (10) for receiving a reflected ultrasonic signal from a plurality of spaced locations lying on a scan path (12) extending across the material (14); and

processing means (28) for processing the reflected ultrasonic signals, by time delay correction, addition and storage, to produce information which is indicative of internal structures of the material (14);

characterised in that the processing means (28) comprises:

a memory (22) connected to the transducer means (10) for storing the reflected ultrasonic signals from each location on the scan path; and

calculator means (26) connected to the memory (22) and operative to calculate a composite signal for each individual location, which composite signal is equal to the summation of the reflected ultrasonic signal from that individual location plus a phase-corrected reflected ultrasonic signal from each other location spaced from that individual location, each of which phase-corrected reflected signals is equal to the reflected signal multiplied by a phase shift factor corresponding to a time delay for the reflected signal from that other location to the individual location;

the memory (22) and calculator means (26) being constituted by a computer (28) for storing each reflected signal and for calculating each composite signal according to the relationship:

$$\sum_{i=-N}^{N'} S_{(a+i)} \, e^{j2K\,(d^2 + X_i^2)^{\frac{1}{2}}}$$

wherein:

N is the number of locations before an individual location a;

N′ is the number of locations after the location a;

$S_{(a+i)}$ is the reflected signal at each location a + i, i being a number designating each individual location;

6

$X_i$ is the distance between location a and location a + i along the scan path;

d is the depth from a surface of the material to the internal structure which causes the reflected signal; and

K is equal to $2\pi/\lambda$, $\lambda$ being the wavelength of the ultrasonic waves.

## Patentansprüche

1. Verfahren für die Ultraschalluntersuchung eines Materials, wobei das Verfahren aufeist:

Übertragen von Ultraschallwellen in das Material (14), um reflektierte Signale zu erzeugen, welche charakteristisch für innere Strukturen des Materials (14) sind,

Erfassen der reflektierten Signale an einer Vielzahl von voneinander beabstandeten Stellen, welche entlang eines Abtastweges (12) über das Material (14) verteilt sind, und

Verarbeiten der erfaßten Signale durch Zeitverzögerungskorrektur, Addition und Speicherung, um eine Information zu gewinnen, welche eine Anzeige für die inneren Strukturen des Materials (14) ist,

dadurch gekennzeichnet, daß das Verarbeiten aufweist:

Abspeichern der erfaßten reflektierten Signale für jede Stelle,

für jede einzelne Stelle Multiplizieren des abgespeicherten erfaßten reflektierten Signals jeder anderen Stelle mit einem entsprechenden korrigierenden Phasenverschiebungsfaktor, welcher charakteristisch für eine Zeitverzögerung des erfaßten reflektierten Signals von der anderen Stelle zu der einzelnen Stelle ist, und dadurch Erhalten eines phasenkorrigierten reflektierten Signals für jede andere Stelle, und

für jede einzelne Stelle Hinzufügen der phasenkorrigierten reflektierten Signale der anderen Stellen zu dem reflektierten Signal für die jeweilige einzelne Stelle, um ein zusammengesetztes Signal zu bilden, welches eine Anzeige für innere Strukturen des Materials (14) ist, wobei jedes zusammengesetzte Signal gleich:

$$\sum_{i = -N}^{N'} S_{(a + i)} \, e^{j2K \, (d^2 + X_i^2)^{\frac{1}{2}}}$$

ist, wobei

N die Anzahl von Stellen vor einer einzelnen Stelle a ist,

N' die Anzahl von Stellen hinter der Stelle a ist,

$S_{(a+i)}$ das reflektierte Signal an jeder Stelle a + i ist, wobei i eine Zahl ist, die jede einzelne Stelle bezeichnet,

$X_i$ der Abstand zwischen der Stelle a und der Stelle a + i entlang des Abtastweges ist,

d die Tiefe von der Oberfläche des Materials zu der inneren Struktur ist, welche das reflektierte Signal verursacht, und

K gleich $2\pi/\lambda$, wobei $\lambda$ die Wellenlänge der Ultraschallwellen ist.

2. Vorrichtung für die Ultraschalluntersuchung eines Materials, wobei die Vorrichtung aufweist:

eine Übertragungseinrichtung (10), um Ultraschallwellen auf das Material (14) aufzubringen und um ein von inneren Strukturen des Materials (14) zurückreflektiertes Signal zu empfangen,

eine Abtasteinrichtung (20), welche mit der Übertragungseinrichtung (10) verbunden ist, um ein reflektiertes Ultraschallsignal von einer Mehrzahl von voneinander beabstandeten Stellen zu empfangen, die auf einem Abtastweg (12) liegen, welcher sich über das Material (14) hinweg erstreckt, und

eine Verarbeitungseinrichtung (28) zum Verarbeiten der reflektierten Ultraschallwellen durch Zeitverzögerungskorrektur, Addition und Abspeichern, um eine Information zu erzeugen, welche eine Anzeige für die inneren Strukturen des Materials (14) ist,

dadurch gekennzeichnet, daß die Verarbeitungseinrichtung (28) aufweist:

einen Speicher (22), der mit der Übertragungseinrichtung (10) verbunden ist, um die reflektierten Ultraschallsignale von jeder Stelle auf dem Abtastweg zu speichern, und

eine Berechnungseinrichtung (26), welche mit dem Speicher (22) verbunden ist und so betreibbar ist, daß sie für jede einzelne Stelle ein zusammengesetztes Signal berechnet, wobei das zusammengesetzte Signal gleich der Summe des reflektierten Ultraschallsignals von der betreffenden einzelnen Stelle plus eines phasenkorrigierten reflektierten Ultraschallsignals von jeder anderen Stelle ist, die von der betreffenden einzelnen Stelle beabstandet sind, wobei jedes der phasenkorrigierten reflektierten Signale gleich dem reflektierten Signal multipliziert mit einem Phasenverschiebungsfaktor ist, der einer Zeitverzögerung für das reflektierte Signal von der anderen Stelle zu der jeweiligen einzelnen Stelle entspricht,

wobei der Speicher (22) und die Berechnungseinrichtung (26) von einem Computer (28) zum Speichern jedes reflektierten Signals und zum Berechnen des zusammengesetzten Signals gemäß der Beziehung:

$$\sum_{i = -N}^{N'} S_{(a + i)}\, e^{j2K\, (d^2 + X_i^2)^{\frac{1}{2}}}$$

gebildet werden, wobei

N die Anzahl von Stellen vor einer einzelnen Stelle a ist,

N' die Anzahl von Stellen hinter der Stelle a ist,

$S_{(a+i)}$ das reflektierte Signal an jeder Stelle a + i ist, wobei i eine Zahl ist, die jede einzelne Stelle bezeichnet,

$X_i$ der Abstand zwischen der Stelle a und der Stelle a + i entlang des Abstastweges ist,

d die Tiefe von der Oberfläche des Materials zu der inneren Struktur ist, welche das reflektierte Signal verursacht, und

K gleich 2 π/λ, wobei λ die Wellenlänge der Ultraschallwellen ist.

**Revendications**

1. Procédé pour l'inspection par ondes ultrasonores d'un matériau, le procédé comprenant:

une émission d'ondes ultrasonores dans le matériau (14) pour produire des signaux réfléchis qui sont caractéristiques des structures internes du matériau (14);

une détection des signaux réfléchis en une pluralité de positions espacées réparties le long d'un trajet d'exploration (12) sur le matériau (14); et

un traitement des signaux détectés, par correction du temps de propagation, addition et stockage, pour produire une information qui est indicative des structures internes du matériau (14);

caractérisé en ce que ledit traitement comprend:

un stockage du signal réfléchi détecté pour chaque position;

pour chaque position individuelle, une multiplication du signal réfléchi détecté stocké pour chaque autre position par un facteur correctif respectif de déphasage qui est caractéristique du temps de propagation du signal réfléchi détecté issu de cette autre position jusqu'à la position individuelle. Pour obtenir par ce moyen un signal réfléchi corrigé en phase pour chacune des autres positions; et

pour chaque position individuelle, une addition des signaux réfléchis corrigés en phase pour les autres positions au signal réfléchi pour la position individuelle pour former un signal composite qui est indicatif des structures internes du matériau (14), chaque signal composite étant égal à:

$$\sum_{i = -N}^{N'} S_{(a + i)}\, e^{j2K\, (d^2 + X_i^2)^{\frac{1}{2}}}$$

où:

N est le nombre de positions avant la position individuelle a;

N' est le nombre de positions après la position a;

$S_{(a+i)}$ est le signal réfléchi à chaque position a + i, i étant un nombre désignant chaque position individuelle;

$X_i$ est la distance entre la position a et la position a + i le long du trajet de balayage;

d est la profondeur à partir de la surface du matériau jusqu'à la structure interne qui provoque la réflection du signal; et

K est égal à 2 π/λ, λ étant la longueur d'onde des ondes ultrasonores.

2. Appareil pour l'inspection par ondes ultrasonores d'un matériau, l'appareil comprenant:

des moyens de transducteurs (10) pour appliquer une onde ultrasonore au matériau (14) et pour recevoir un signal ultrasonore réfléchi en retour à partir des structures internes du matériau (14);

des moyens de balayage (20) connectés aux moyens de transducteurs (10) pour recevoir un signal ultrasonore réfléchi issu d'une pluralité de positions espacées situées sur un trajet d'exploration (12) s'étendant à travers le matériau (14); et

des moyens de traitement (28) pour traiter les signaux ultrasonores réfléchis, par correction de temps de propagation, addition et stockage, pour produire une information qui est indicative des structures internes du matériau (14);

caractérisé en ce que les moyens de traitement (28) comprenant:

une mémoire (22) reliée aux moyens de transducteurs (10) pour stocker les signaux untrasonores réfléchis issus de chaque position sur le trajet d'exploration; et

des moyens de calculateur (26) reliés à la mémoire (22) et adaptés pour calculer un signal composite pour chaque position individuelle, lequel signal composite est égal à la sommation des signaux ultrasonores réfléchis issus de cette position individuelle plus un signal ultrasonore réfléchi corrigé en phase issu de chacune des autres positions distinctes de cette position individuelle, chacun desquels signaux réfléchi corrigé en phase est égal au signal réfléchi multiplié par un facteur de déphasage correspondant à un temps de propagation pour le signal réfléchi issu de cette autre position jusqu'à la position individuelle;

la mémoire (22) et les moyens de calculateur (26) étant constitués par un ordinateur (28) pour stocker chaque signal réfléchi et pour calculer chaque signal composite selon la relation:

$$\sum_{i = -N}^{N'} S_{(a + i)}\, e^{j2K\, (d^2 + X_i^2)^{\frac{1}{2}}}$$

où:

N est le nombre de positions avant la position individuelle a;

N' est le nombre de positions après la position a;

$S_{(a+i)}$ est le signal réfléchi à chaque position a + i, i étant un nombre désignant chaque position individuelle;

$X_i$ est la distance entre la position a et la position a + i le long du trajet de balayage;

d est la profondeur à partir de la surface du matériau jusqu'à la structure interne qui provoque la réflection du signal; et

K est égal à 2 π/λ, λ étant la longueur d'onde des ondes ultrasonores.

*FIG. I*

*FIG. 2*

## FIG. 3

Specify # Data Points Sampled, $\lambda$ $\Delta$x, z, and angle $\alpha$ ——30

Ultrasonic System ——31

Record 2 Phase Sensitive Scan Blocks of Data, with 90° Separation ——32

33—— Generate Vector Rotational Argument (Transfer Function)   $e^{if(x,z)}$

34—— Arrange Real and Complex Components of Sampled Data (4 Blocks)

35—— Rotate Each Sampled Vector

36—— Sum Vector Rotated for Each Sample Point

37—— Compute Magnitude for Display (r + i) (r − i)

38—— Output

2